(19) **Europäisches Patentamt / European Patent Office / Office européen des brevets**

(11) **EP 4 425 282 B1**

(12) **EUROPEAN PATENT SPECIFICATION**

(45) Date of publication and mention
of the grant of the patent:
**22.07.2026 Bulletin 2026/30**

(21) Application number: **23159003.5**

(22) Date of filing: **28.02.2023**

(51) International Patent Classification (IPC):
**G05B 19/042** $^{(2006.01)}$   **G05B 23/02** $^{(2006.01)}$
**G05B 19/418** $^{(2006.01)}$

(52) Cooperative Patent Classification (CPC):
**G05B 23/0221; G05B 13/027; G05B 19/042;
G05B 19/4184**

(54) **METHOD AND SYSTEM FOR AUTOMATICALLY DETECTING ERRORS IN INDUSTRIAL PLANT
CONFIGURATION TABLES**

VERFAHREN UND SYSTEM ZUR AUTOMATISCHEN FEHLERERKENNUNG IN
INDUSTRIEANLAGEN-KONFIGURATIONSTABELLEN

PROCÉDÉ ET SYSTÈME DE DÉTECTION AUTOMATIQUE D'ERREURS DANS DES TABLES DE
CONFIGURATION D'INSTALLATIONS INDUSTRIELLES

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**04.09.2024 Bulletin 2024/36**

(73) Proprietor: **Siemens Aktiengesellschaft
80333 München (DE)**

(72) Inventor: **Ringsquandl, Martin
83064 Raubling (DE)**

(74) Representative: **Siemens Patent Attorneys
Postfach 22 16 34
80506 München (DE)**

(56) References cited:
**US-A1- 2017 124 049     US-A1- 2022 230 476**

- NASHAAT MONA NASHAATA@UALBERTA CA
ET AL: "TabReformer: Unsupervised
Representation Learning for Erroneous Data
Detection", ACM/IMS TRANSACTIONS ON DATA
SCIENCE, ACMPUB27, NEW YORK, NY, vol. 2,
no. 3, 17 May 2021 (2021-05-17), pages 1 - 29,
XP058610994, ISSN: 2691-1922, DOI: 10.1145/
3447541

Remarks:
The file contains technical information submitted
after the application was filed and not included in this
specification

**Description**

Ensuring correct configuration of plant equipment is one of the main tasks of plant engineers. However, configuration data of industrial plants is often maintained with low quality. One of the main problems is that engineers manually enter critical information about plant equipment and processes in collaborative spreadsheets. This leads to incorrect values due to human errors, false auto-correction, etc. Especially when new equipment is introduced, configuration values typically are copy-pasted from existing configuration entries, **e.g.,** from the most similar machine, which now results in error propagation.

Typically, such spreadsheets are roughly organized in tabular form, where each row represents an equipment, and each column represents some property of said equipment.

Configuration data is usually entered and corrected manually in these spreadsheets.

NASHAAT MONA NASHAATA@UALBERTA CA ET AL: "TabReformer: Unsupervised Representation Learning for Erroneous Data Detection", ACM/IMS TRANSACTIONS ON DATA SCIENCE, ACMPUB27, NEW YORK, NY, vol. 2, no. 3, 17 May 2021 (2021-05-17), pages 1-29, XP058610994, ISSN: 2691-1922, DOI: 10.1145/3447541, discloses a software tool called TabReformer allowing data error detection in data tables.

US 2022/230476 A1 discloses data cleansing in a table obtained from time series data measured by sensors in an industrial plant.

It is an object of the present invention to identify a problem in the prior art and to find a technical solution for this.

The objectives of the invention are solved by the independent claims. Further advantageous arrangements and embodiments of the invention are set forth in the respective dependent claims.

According to the method for automatically detecting errors in industrial plant configuration tables, the following operations are performed by components, wherein the components are software components executed by one or more processors and/or hardware components:

- estimating, by a trained table encoder processing a configuration table,

    - wherein the configuration table contains a header row and body rows,
    - wherein each body row contains body cells and corresponds to an entity of an industrial plant,
    - wherein each column of the table corresponds to a configuration property of the respective entities,
    - wherein the header row contains header cells naming the respective properties,
    - wherein the body cells contain tokens,
    - wherein the table encoder (TE) is implemented with a token classification model that uses a tabular language model to obtain latent representations of the tokens, and
    - wherein the tabular language model has a token classification head on top,

    for each body cell and/or for each token in that body cell, an error probability value, which gives an estimated probability that the cell and/or the token contains an error, and
- comparing the error probability value for each body cell and/or for each token in that body cell with a given threshold, and if the error probability value is above the given threshold, detecting that the body cell is erroneous.

The system for automatically detecting errors in industrial plant configuration tables comprises the following components:

- a table encoder, trained for processing a configuration table,

    - wherein the configuration table contains a header row and body rows,
    - wherein each body row contains body cells and corresponds to an entity of an industrial plant,
    - wherein each column of the table corresponds to a configuration property of the respective entities,
    - wherein the header row contains header cells naming the respective properties,
    - wherein the body cells contain tokens,
    - wherein the table encoder (TE) is implemented with a token classification model that uses a tabular language model to obtain latent representations of the tokens, and
    - wherein the tabular language model has a token classification head on top,

    and estimating for each body cell and/or for each token in that body cell, an error probability value, which gives an estimated probability that the cell and/or the token contains an error, and
- a comparator, configured for comparing the error probability value for each body cell and/or for each token in that body cell with a given threshold, and if the error probability value is above the given threshold, detecting that the body cell is erroneous.

The following advantages and explanations are not necessarily the result of the object of the independent claims. Rather, they may be advantages and explanations that only apply to certain embodiments or variants.

In connection with the invention, unless otherwise stated in the description, the terms "training", "generating", "computer-aided", "calculating", "determining", "reasoning", "retraining" and the like relate preferably to actions and/or processes and/or processing steps that change and/or generate data and/or convert the data into other data, the data in particular being or being able to be represented as physical quantities, for example as electrical impulses.

The term "computer" should be interpreted as broadly as possible, in particular to cover all electronic devices with data processing properties. Computers can thus, for example, be personal computers, servers, clients, programmable logic controllers (PLCs), handheld computer systems, pocket PC devices, mobile radio devices, smartphones, devices or any other communication devices that can process data with computer support, processors and other electronic devices for data processing. Computers can in particular comprise one or more processors and memory units.

In connection with the invention, a "memory", "memory unit" or "memory module" and the like can mean, for example, a volatile memory in the form of random-access memory (RAM) or a permanent memory such as a hard disk or a Disk.

The method and system, or at least some of their embodiments, allow for automatically finding cells in existing configuration tables for industrial plant equipment that contain errors. As a result, the table encoder, as a deep learning model, can act as a data quality guard, improving the overall configuration data quality over time.

An embodiment of the method comprises the additional operations of outputting, by a user interface, the erroneous body cell, and receiving, by the user interface, a corrected value for the erroneous body cell.

With this embodiment, pre-existing configuration tables can be quickly corrected, as the embodiment automatically finds erroneous cells and shows them to a user for correction.

Another embodiment of the method comprises the additional operations of generating different versions of the configuration table, in particular by filling, in each version, the erroneous cell with a value from another cell in the same column of the configuration table, estimating, by the trained table encoder, for each version an error probability value for the filled cell, and choosing the version with the lowest error probability value.

According to this embodiment, the table encoder identifies the best correction for the erroneous cell based on other entries in the same configuration table, thereby implementing an automated correction mechanism.

Yet another embodiment of the method comprises the additional operations of receiving, by a user interface, at least one entry for a new row to the configuration table, generating different versions of the configuration table by filling an empty cell in the new row with different values, in particular with random values or with values from other cells in the respective column of the configuration table, estimating, by the trained table encoder, for each version an error probability value for the filled cell, and choosing the version with the lowest error probability value.

According to this embodiment, configuration properties of new plant equipment are automatically predicted by the table encoder.

In an embodiment of the method, the tabular language model is implemented with a TaBert or TURL architecture.

In an embodiment of the method, the table encoder is initially trained with the operations of

- providing, by a database, a set of configuration tables,
- extracting, by a spreadsheet pre-processor, tokenized table cells from each configuration table, and
- iteratively performing the following operations:

    - processing, by the table encoder, the tokenized table cells and estimating for each tokenized table cell an error probability value,
    - selecting, by an Active Learning Query Strategy, candidate cells from the set of configuration tables with a mixed strategy combining uncertainty sampling with a penalty for picking multiple candidate cells from the same configuration table,
    - outputting, by a user interface, the candidate cells,
    - receiving, by the user interface, labeled cells, wherein the labeled cells contain the candidate cells as well as labels indicating whether the candidate cells are erroneous, and
    - performing, by a training component, gradient updates on the table encoder, using the labeled cells.

As a result, the table encoder is re-trained after each user interaction, until the table encoder is fully trained and usable as a table token classification model. Using active learning, which is novel with regard to token classification in tabular data, allows to reduce the required amount of labeled data efficiently. The Active Learning Query Strategy balances uncertainty versus diversity and ensures that the candidate cells are selected from a diverse range of configuration tables due to the penalty. The Active Learning Query Strategy is a mixture between selecting the most uncertain cells while maintaining diversity.

In other words, this embodiment provides a novel active learning workflow for tabular data and deep machine learning models. The employed query strategy balances uncertainty versus diversity, thus ensuring good performance with a limited amount of labels. Furthermore, the embodiment saves experts time in annotating cells in configuration tables.

In a further embodiment of the method, the uncertainty sampling is implemented by selecting candidate cells that have maximum entropy given the current training state of the table encoder, and the penalty is implemented by a penalty weight that increases with the number of candidate cells being selected from the same configuration table.

An embodiment of the system provides an active learning system, comprising

- a database, storing a set of configuration tables,
- a spreadsheet pre-processor, configured for extracting tokenized table cells from each configuration table,
- the system, wherein the table encoder is configured for processing the tokenized table cells and estimating for each tokenized table cell an error probability value,
- an Active Learning Query Strategy component, configured for selecting candidate cells from the set of configuration tables with a mixed strategy combining uncertainty sampling with a penalty for picking multiple candidate cells from the same configuration table,
- a user interface, configured for

  - outputting the candidate cells, and
  - receiving labeled cells, wherein the labeled cells contain the candidate cells as well as labels indicating whether the candidate cells are erroneous, and

- a training component, configured for performing gradient updates on the table encoder, using the labeled cells.

The computer program product comprises instructions which, when the program is executed by a computer, cause the computer to carry out the method.

The provision device stores and/or provides the computer program product.

The foregoing and other aspects of the present invention are best understood from the following detailed description when read in connection with the accompanying drawings. For the purpose of illustrating the invention, there are shown in the drawings embodiments that are presently preferred, it being understood, however, that the invention is not limited to the specific instrumentalities disclosed. The embodiments may be combined with each other. Furthermore, the embodiments may be combined with any of the features described above. Unless stated otherwise, identical reference signs denote the same features or functionally identical elements between drawings. Included in the drawings are the following Figures:

Fig. 1    shows a first embodiment,

Fig. 2    shows another embodiment,

Fig. 3    shows an example configuration table CT, wherein a row for new equipment shows a highlighted error,

Fig. 4    shows an embodiment of an active learning system ALS, and

Fig. 5    shows a flowchart of a possible exemplary embodiment of a method for automatically detecting errors in industrial plant configuration tables.

In the following description, various aspects of the present invention and embodiments thereof will be described. However, it will be understood by those skilled in the art that embodiments may be practiced with only some or all aspects thereof. For purposes of explanation, specific numbers and configurations are set forth in order to provide a thorough understanding. However, it will also be apparent to those skilled in the art that the embodiments may be practiced without these specific details.

The described components can each be hardware components or software components. For example, a software component can be a software module such as a software library; an individual procedure, subroutine, or function; or, depending on the programming paradigm, any other portion of software code that implements the function of the software component. A combination of hardware components and software components can occur, in particular, if some of the effects according to the invention are preferably exclusively implemented by special hardware (e.g., a processor in the form of an ASIC or FPGA) and some other part by software.

Yin P., Neubig G., Yih W., Riedel S., TABERT: Pretraining for Joint Understanding of Textual and Tabular Data, ACL 2020, discloses the TaBERT transformer architecture.

Deng et al., TURL: table understanding through representation learning, VLDB 2020, discloses the TURL transformer architecture.

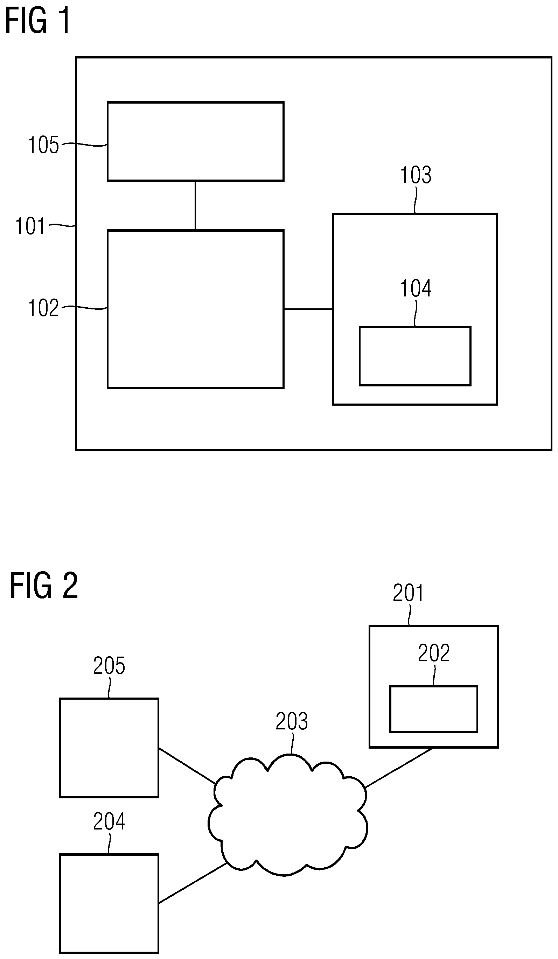

Fig. 1 shows one sample structure for computer-implementation of the invention which comprises:

(101)    computer system
(102)    processor
(103)    memory
(104)    computer program (product)
(105)    user interface

In this embodiment of the invention the computer program product 104 comprises program instructions for carrying out the invention. The computer program 104 is stored in the memory 103 which renders, among others, the memory and/or its related computer system 101 a provisioning device for the computer program product 104. The system 101 may carry out the invention by executing the program instructions of the computer program 104 by the processor 102. Results of invention may be presented on the user interface 105. Alternatively, they may be stored in the memory 103 or on another suitable means for storing data.

Fig. 2 shows another sample structure for computer-implementation of the invention which comprises:

(201)    provisioning device
(202)    computer program (product)
(203)    computer network / Internet
(204)    computer system
(205)    mobile device / smartphone

In this embodiment the provisioning device 201 stores a computer program 202 which comprises program instructions for carrying out the invention. The provisioning device 201 provides the computer program 202 via a computer network / Internet 203. By way of example, a computer system 204 or a mobile device / smartphone 205 may load the computer program 202 and carry out the invention by executing the program instructions of the computer program 202.

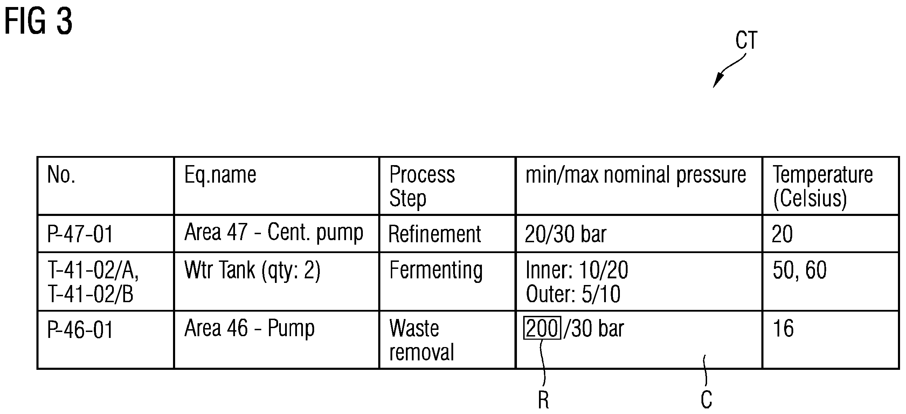

Preferably, the embodiments shown in Figs. 3 to 5 can be implemented with a structure as shown in Fig. 1 or Fig. 2.

The embodiments described in the following can automatically predict configuration properties of new plant equipment or suggest corrections for erroneous existing ones.

Fig. 3 shows an example configuration of new equipment with a highlighted error. The depicted configuration table CT gives an example of a simple equipment configuration spreadsheet. It can be seen that for example equipment types like "pump" and "tank", a "nominal pressure" is given as a configuration property. An error, marked with a surrounding rectangle R, occurred when copying entries to a new equipment P-46-01 in the third row. The respective cell C is suspicious since the min nominal pressure value is higher than the max nominal pressure value. The goal is to automatically find these cells and to show them to a user for correction.

The following embodiments assume that the configuration table CT is an entity table, where each row corresponds to an entity (e.g., a machine) and each column corresponds to a property of that entity.

The data source of the system is a collection of spreadsheet documents $D = \{T_i\}$, and each spreadsheet represents an entity table $T_i = (H,B)$ $H = h_1, h_2, ..., h_m\}$ is a set of m header cells. The table body $B = \{b_{1,1}, b_{1,2}, ..., b_{n,m}\}$ is the set of table body cells having $n$ rows and m columns. Each body cell $b_{i,j} = (w_1, w_2, ..., w_t)$ and header cell $h_i = (w_1, w_2, ..., w_t)$ is also a sequence of words.

According to the current embodiment, an error prediction is phrased as a machine learning classification problem for every word in either body or cell:

$$f(w) = P(y \,|w), y \in \{True, False\} \; (error, no\ error).$$

Deep learning models require large amounts of labeled data.

The problem of applying deep learning in this context is that labels are typically not available and obtaining labels from experts is very expensive. In other words, labels are scarce.

The following embodiments describe different approaches on how to use active learning to reduce the amount of labeled data, with the goal of providing label-efficient deep learning to correct errors in plant configuration tables. Implementing active learning in tabular data is not an obvious choice as traditional active learning approaches do not work well for deep learning models on tables, i.e., Table Language Models (TaLMs).

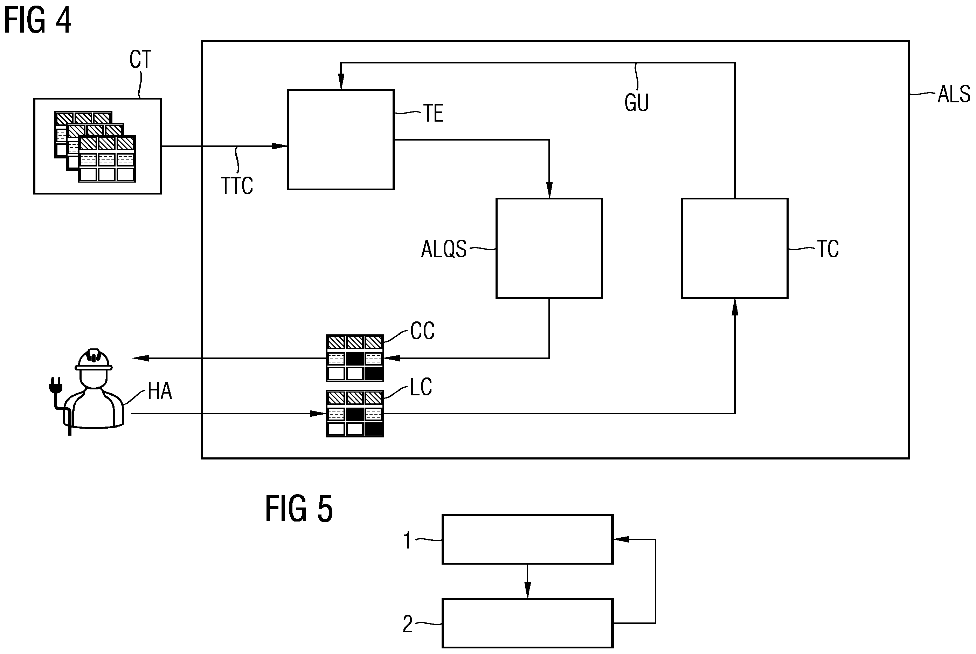

Fig. 4 shows an embodiment of an active learning system ALS, which implements

a) an overall Active Learning Workflow, and
b) an Active Learning Query Strategy ALQS.

As input, the active learning system ALS receives a collection of configuration tables CT, for example, a set of spreadsheet documents.

The output of the active learning system ALS is a trained table encoder TE providing a trained table token classification model.

The token classification model (provided and implemented by the table encoder TE) can be any Tabular Language Model (TaLM) to obtain latent representations of tokens within table cells with a token classification head on top. This is state-of-the-art and can be implemented, for example, with a TaBERT or TURL architecture described in the references cited above. The token classification head is part of the table encoder TE.

In order to train the table encoder TE, tokenized table cells TTC are extracted from the configuration tables CT. This extraction step is performed, for example, by a dedicated spreadsheet preprocessor that transforms the configuration tables CT into a numerical tensor representation. For example, the spreadsheet pre-processor outputs a sequence of cell tokens for each cell in each configuration table CT. Tokenization of each cell can be done in different ways, either on character-, word- or word-piece (token) level.

The table encoder TE includes, for example, a token encoder, which is a neural network that produces a single latent representation for each sequence of cell tokens. For example, LSTMs or transformer models could be used here. The latent representation of the sequence of cell tokens is now the cell representation.

The latent representations of the cells are then processed by multiple layers of a table transformer (e.g., a TaBERT or TURL transformer architecture) with a multi-head self-attention that allows cell embeddings to pass neural messages.

The table transformer is also part of the table encoder TE. It computes and outputs latent token representations for the cells in the configuration tables CT. The latent token representations are then processed by a token classification head, outputting for each token an error probability value, which gives an estimated probability that the token contains an error.

The Active Learning Query Strategy ALQS shown in Fig. 4 is discussed in the following. Active learning for token classification in tabular data needs special characteristics compared to token classification in natural language sentences. Every cell can be seen as a sentence, and they all depend on each other within the same table.

According to the current embodiment, candidate cells CC are presented to a human annotator HA for labeling as shown in Fig. 4. It is desirable to select candidate cells CC which have the highest uncertainty of containing an error (close to equal probability of yes/no), e.g., the most ambiguous or borderline cases. The human annotator HA then labels the candidate cells CC either with the label "yes cell contains error" or with the label "no cell does not contain any error", thus providing labeled cells LC to the active learning system ALS.

Given a pool of unlabeled table tokens $D_U$ and a loss function, e.g., binary cross entropy, $l_{BCE}$, wants to find a subset $D_S \subset D_U$ with restricted budget $|D_S| <$ **budget.** The human annotator HA as shown in Fig. 4 should now label $D_S$. $D_S$ should be such that $\arg min_{D_S} \; \mathbb{E}_{(x,y) \sim D} \left[ l_{BCE}(f_{D_S}(x), y) \right]$ . Here $f_{D_S}$ means the token classification model trained on data $D_S$ and D is the unknown true data distribution.

The labeled cells LC are fed back to a training component TC, which performs gradient updates GU on the table encoder TE. As a result, the table encoder TE is re-trained after each interaction of the human annotator HA with the active learning system ALS.

Traditional query strategies are based on the notion of uncertainty sampling, where the subset $D_S$ is filled one-by-one with $\arg \max_{x \in D_U} \left[ -\sum_{i=1} f_{D_t}(x, y_k) * \log\left(f_{D_t}(x, y_k)\right) \right]$ . In other words, the next unlabeled instance to choose is the one that has maximum entropy given the current classification at time step t model $h_{D_t}$.

For deep learning models this strategy is sub-optimal since it tends to select very similar instances into $D_S$. However, deep learning models are trained in a batch fashion, i.e., $D_S$ is a batch for one training round and therefore this batch should be as diverse as possible to get a maximum performance gain.

For deep learning models on tables the current embodiment uses the following strategy as the active learning query strategy ALQS:

1.

$$D_S = \emptyset$$

2.

$$D_{cand} = \emptyset$$

3. For each table $T_z$

    a. For each row $T_{z[:,c]}$

        i. Find the maximum uncertain cell:

$$\arg \max_{b_{i,j} \in T_z[:,c]} \frac{1}{|b_{i,j}|} score(b_{i,j}),$$

$$score(cell) = \sum_{w \in cell} - \sum_k f_{D_t}(w, y_k) * \log\left(f_{D_t}(w, y_k)\right)$$

        ii.

$$D_{cand} = D_{cand} \cup \{b_{i,j}\}$$

4. For each cell in the sorted $D_{cand}$

    a. If

$$|D_S| < budget : D_S = D_S \cup \{w \in b_{i,j}\}$$

    b.

$$score' = score(cell) * \alpha^{count(tab(cell), D_S)}$$

    c.

$$sort\ D_{cand}\ again\ w.r.t.\ score'$$

The active learning query strategy ALQS ensures that the candidate cells CC are selected from a diverse set of tables due to the penalty weight $\alpha<1$ that increases with the number of cells from the same table in $D_S$. Therefore, it is a mixture between selecting the most uncertain cells while maintaining diversity.

The trained table encoder TE can then be used for different industrial applications, as will be described in the following.

In a first industrial application embodiment, the table encoder TE is used for automatically finding cells in existing configuration tables for industrial plant equipment that contain errors. If the probability value that the table encoder TE outputs for a cell is above a given threshold, then that cell is prompted to a user for correction. In this way, pre-existing configuration tables can be quickly corrected.

In a second industrial application embodiment, the table encoder TE is used not only to find erroneous cells in a configuration table, but to also suggest corrections for their erroneous values. In order to achieve this, a set of plausible candidate values are input into the table encoder TE. The best candidate is the one for which the table encoder TE outputs the lowest error probability. For example, different versions of the configuration table are created, and for each version, the erroneous cell is filled with values taken from another cell in the same column of the configuration table. Each version is then processed by the table encoder TE. The best candidate among these versions is the one for which the table encoder TE outputs the lowest error probability.

In a third industrial application embodiment, configuration properties of new plant equipment are automatically predicted by the table encoder TE. In order to achieve this, a set of plausible candidate property values are input into the table encoder TE. The best candidate among these versions is the one for which the table encoder TE outputs the lowest error probability. For example, different versions of a configuration table are created by adding a new row for a new equipment and filling it with plausible values. Each version is then processed by the table encoder TE. The best candidate among these versions is the one for which the table encoder TE outputs the lowest error probability.

Fig. 5 shows a flowchart of a possible exemplary embodiment of a method for automatically detecting errors in industrial plant configuration tables, wherein the following operations are performed by components, and wherein the components are software components executed by one or more processors and/or hardware components:

In an estimating operation 1, a trained table encoder processes a configuration table, wherein the configuration table contains a header row and body rows, wherein each body row contains body cells and corresponds to an entity of an industrial plant, wherein each column of the table corresponds to a configuration property of the respective entities, wherein the header row contains header cells naming the respective properties, and wherein the body cells contain tokens. The trained table encoder estimates for each body cell and/or for each token in that body cell, an error probability value, which gives an estimated probability that the cell and/or the token contains an error.

In a comparing operation 2, the error probability value for each body cell and/or for each token in that body cell is compared with a given threshold, and if the error probability value is above the given threshold, it is detected that the body cell is erroneous.

For example, the method can be executed by one or more processors. Examples of processors include a microcontroller or a microprocessor, an Application Specific Integrated Circuit (ASIC), or a neuromorphic microchip, in particular a neuromorphic processor unit. The processor can be part of any kind of computer, including mobile computing devices such as tablet computers, smartphones or laptops, or part of a server in a control room or cloud.

The above-described method may be implemented via a computer program product including one or more computer-readable storage media having stored thereon instructions executable by one or more processors of a computing system. Execution of the instructions causes the computing system to perform operations corresponding with the acts of the method described above.

The instructions for implementing processes or methods described herein may be provided on non-transitory computer-readable storage media or memories, such as a cache, buffer, RAM, FLASH, removable media, hard drive, or other computer readable storage media. Computer readable storage media include various types of volatile and non-volatile storage media. The functions, acts, or tasks illustrated in the figures or described herein may be executed in response to one or more sets of instructions stored in or on computer readable storage media. The functions, acts or tasks may be independent of the particular type of instruction set, storage media, processor or processing strategy and may be performed by software, hardware, integrated circuits, firmware, micro code and the like, operating alone or in combination. Likewise, processing strategies may include multiprocessing, multitasking, parallel processing and the like.

The invention has been described in detail with reference to embodiments thereof and examples. Variations and modifications may, however, be effected within the scope of the invention covered by the claims. The phrase "at least one of A, B and C" as an alternative expression may provide that one or more of A, B and C may be used.

**Claims**

1. A computer implemented method for automatically detecting errors in industrial plant configuration tables, wherein the following operations are performed by components, and wherein the components are software components executed by one or more processors and/or hardware components:

    - estimating (1), by a trained table encoder (TE) processing a configuration table (CT),

        - wherein the configuration table (CT) contains a header row and body rows,
        - wherein each body row contains body cells and corresponds to an entity of an industrial plant,
        - wherein each column of the table (CT) corresponds to a configuration property of the respective entities,
        - wherein the header row contains header cells naming the respective properties,
        - wherein the body cells contain tokens,
        - wherein the table encoder (TE) is implemented with a token classification model that uses a tabular language model to obtain latent representations of the tokens, and
        - wherein the tabular language model has a token classification head on top,

    for each body cell and/or for each token in that body cell, an error probability value, which gives an estimated probability that the cell and/or the token contains an error, and
    - comparing (2) the error probability value for each body cell and/or for each token in that body cell with a given threshold, and if the error probability value is above the given threshold, detecting that the body cell is erroneous.

2. The method of claim 1, with the additional operations of

   - outputting, by a user interface, the erroneous body cell, and
   - receiving, by the user interface, a corrected value for the erroneous body cell.

3. The method of claim 1, with the additional operations of

   - generating different versions of the configuration table (CT), in particular by filling, in each version, the erroneous cell with a value from another cell in the same column of the configuration table (CT),
   - estimating, by the trained table encoder (TE), for each version an error probability value for the filled cell, and
   - choosing the version with the lowest error probability value.

4. The method of claim 1, with the additional operations of

   - receiving, by a user interface, at least one entry for a new row to the configuration table (CT),
   - generating different versions of the configuration table (CT) by filling an empty cell in the new row with different values, in particular with random values or with values from other cells in the respective column of the configuration table (CT),
   - estimating, by the trained table encoder (TE), for each version an error probability value for the filled cell, and
   - choosing the version with the lowest error probability value.

5. The method according to any of the preceding claims,

   - wherein the tabular language model is implemented with a TaBert or TURL architecture.

6. The method according to any of the preceding claims, wherein the table encoder (TE) is initially trained with the operations of

   - providing, by a database, a set of configuration tables (CT),
   - extracting, by a spreadsheet pre-processor, tokenized table cells (TTC) from each configuration table (CT), and
   - iteratively performing the following operations:

     - processing, by the table encoder (TE), the tokenized table cells (TTC) and estimating for each tokenized table cell (TTC) an error probability value,
     - selecting, by an Active Learning Query Strategy (ALQS), candidate cells (CC) from the set of configuration tables (CT) with a mixed strategy combining uncertainty sampling with a penalty for picking multiple candidate cells (CC) from the same configuration table (CT),
     - outputting, by a user interface, the candidate cells (CC),
     - receiving, by the user interface, labeled cells (LC), wherein the labeled cells (LC) contain the candidate cells (CC) as well as labels indicating whether the candidate cells (CC) are erroneous, and
     - performing, by a training component (TC), gradient updates (GU) on the table encoder (TE), using the labeled cells (LC).

7. The method according to claim 6,

   - wherein the uncertainty sampling is implemented by selecting candidate cells (CC) that have maximum entropy given the current training state of the table encoder (TE), and
   - wherein the penalty is implemented by a penalty weight that increases with the number of candidate cells (CT) being selected from the same configuration table (CT).

8. A system for automatically detecting errors in industrial plant configuration tables, comprising:

   - a table encoder (TE), trained for processing a configuration table (CT),

     - wherein the configuration table (CT) contains a header row and body rows,
     - wherein each body row contains body cells and corresponds to an entity of an industrial plant,
     - wherein each column of the table (CT) corresponds to a configuration property of the respective entities,
     - wherein the header row contains header cells naming the respective properties,

- wherein the body cells contain tokens,
- wherein the table encoder (TE) is implemented with a token classification model that uses a tabular language model to obtain latent representations of the tokens, and
- wherein the tabular language model has a token classification head on top,

and estimating for each body cell and/or for each token in that body cell, an error probability value, which gives an estimated probability that the cell and/or the token contains an error, and
- a comparator, configured for comparing (2) the error probability value for each body cell and/or for each token in that body cell with a given threshold, and if the error probability value is above the given threshold, detecting that the body cell is erroneous.

9. An active learning system (ALS), comprising

- a database, storing a set of configuration tables (CT),
- a spreadsheet pre-processor, configured for extracting tokenized table cells (TTC) from each configuration table (CT),
- the system according to claim 8, wherein the table encoder (TE) is configured for processing the tokenized table cells (TTC) and estimating for each tokenized table cell (TTC) an error probability value,
- an Active Learning Query Strategy (ALQS) component, configured for selecting candidate cells (CC) from the set of configuration tables (CT) with a mixed strategy combining uncertainty sampling with a penalty for picking multiple candidate cells (CC) from the same configuration table (CT),
- a user interface, configured for

- outputting the candidate cells (CC), and
- receiving labeled cells (LC), wherein the labeled cells (LC) contain the candidate cells (CC) as well as labels indicating whether the candidate cells (CC) are erroneous, and

- a training component (TC), configured for performing gradient updates (GU) on the table encoder (TE), using the labeled cells (LC).

10. A computer program product comprising instructions which, when the program is executed by a computer, cause the computer to carry out a method according to one of the method claims.

11. Provision device for the computer program product according to the preceding claim, wherein the provision device stores and/or provides the computer program product.

## Patentansprüche

1. Computerimplementiertes Verfahren zum automatischen Erkennen von Fehlern in Konfigurationstabellen für Industrieanlagen, wobei die folgenden Operationen von Komponenten durchgeführt werden und es sich bei den Komponenten um Softwarekomponenten, die von einem oder mehreren Prozessoren ausgeführt werden, und/oder um Hardwarekomponenten handelt:

- Schätzen (1) durch einen trainierten Tabellencodierer (TE), der eine Konfigurationstabelle (CT) verarbeitet,

- wobei die Konfigurationstabelle (CT) eine Kopfzeile und Tabellenkörperzeilen enthält,
- wobei jede Tabellenkörperzeile Tabellenkörperzellen enthält und einer Einheit einer Industrieanlage entspricht,
- wobei jede Spalte der Tabelle (CT) einer Konfigurationseigenschaft der jeweiligen Einheiten entspricht,
- wobei die Kopfzeile Kopfzellen enthält, die die jeweiligen Eigenschaften nennen,
- wobei die Tabellenkörperzellen Token enthalten,
- wobei der Tabellencodierer (TE) mit einem Token-Klassifizierungsmodell implementiert ist, das ein tabellarisches Sprachmodell zum Erfassen latenter Repräsentationen der Token benutzt, und
- wobei das tabellarische Sprachmodell oben einen Token-Klassifizierungskopf aufweist,

eines Fehlerwahrscheinlichkeitswerts für jede Tabellenkörperzelle und/oder für jedes Token in dieser Tabellenkörperzelle, der eine geschätzte Wahrscheinlichkeit angibt, dass die Zelle und/oder das Token einen Fehler enthält, und

- Vergleichen (2) des Fehlerwahrscheinlichkeitswerts für jede Tabellenkörperzelle und/oder jedes Token in dieser Tabellenkörperzelle mit einem vorgegebenen Schwellenwert und, wenn der Fehlerwahrscheinlichkeitswert über dem vorgegebenen Schwellenwert liegt, Erkennen, dass die Tabellenkörperzelle fehlerhaft ist.

2. Verfahren nach Anspruch 1 mit folgenden zusätzlichen Operationen:

- Ausgeben der fehlerhaften Tabellenkörperzelle über eine Benutzerschnittstelle und
- Empfangen eines korrigierten Werts für die fehlerhafte Tabellenkörperzelle über die Benutzerschnittstelle.

3. Verfahren nach Anspruch 1 mit folgenden zusätzlichen Operationen:

- Erzeugen verschiedener Versionen von der Konfigurationstabelle (CT), insbesondere durch Ausfüllen der fehlerhaften Zelle mit einem Wert aus einer anderen Zelle in der gleichen Spalte der Konfigurationstabelle (CT) bei jeder Version,
- Schätzen eines Fehlerwahrscheinlichkeitswerts für die ausgefüllte Zelle bei jeder Version durch den trainierten Tabellencodierer (TE) und
- Wählen der Version mit dem geringsten Fehlerwahrscheinlichkeitswert.

4. Verfahren nach Anspruch 1 mit folgenden zusätzlichen Operationen:

- Empfangen mindestens eines Eintrags für eine neue Zeile in der Konfigurationstabelle (CT) über eine Benutzerschnittstelle,
- Erzeugen verschiedener Versionen von der Konfigurationstabelle (CT) durch Ausfüllen einer leeren Zelle in der neuen Zeile mit verschiedenen Werten, insbesondere mit Zufallswerten oder Werten aus anderen Zellen in der jeweiligen Spalte der Konfigurationstabelle (CT),
- Schätzen eines Fehlerwahrscheinlichkeitswerts für die ausgefüllte Zelle bei jeder Version durch den trainierten Tabellencodierer (TE) und
- Wählen der Version mit dem geringsten Fehlerwahrscheinlichkeitswert.

5. Verfahren nach einem der vorhergehenden Ansprüche,

- wobei das tabellarische Sprachmodell mit einer TaBert- oder TURL-Architektur implementiert wird.

6. Verfahren nach einem der vorhergehenden Ansprüche, wobei der Tabellencodierer (TE) zunächst mit folgenden Operationen trainiert wird:

- Bereitstellen eines Satzes Konfigurationstabellen (CT) über eine Datenbank,
- Extrahieren tokenisierter Tabellenzellen (TTC) aus jeder Konfigurationstabelle (CT) über einen Tabellenkalkulationsvorprozessor und
- iteratives Durchführen folgender Operationen:

- Verarbeiten der tokenisierten Tabellenzellen (TTC) durch den Tabellencodierer (TE) und Schätzen eines Fehlerwahrscheinlichkeitswerts für jede tokenisierte Tabellenzelle (TTC),
- Wählen von Kandidatenzellen (CC) aus dem Satz Konfigurationstabellen (CT) mit einer gemischten Strategie, die ein Uncertainty Sampling mit einer Strafe für das Auswählen mehrerer Kandidatenzellen (CC) aus der gleichen Konfigurationstabelle (CT) kombiniert, über eine Abfragestrategie beim aktiven Lernen (ALQS),
- Ausgeben der Kandidatenzellen (CC) über eine Benutzerschnittstelle,
- Empfangen von gelabelten Zellen (LC) über die Benutzerschnittstelle (LC), wobei die gelabelten Zellen (LC) die Kandidatenzellen (CC) sowie Label enthalten, die angeben, ob die Kandidatenzellen (CC) fehlerhaft sind, und
- Durchführen von Gradientenaktualisierungen (GU) an dem Tabellencodierer (TE) unter Verwendung der gelabelten Zellen (LC) durch eine Trainingskomponente (TC).

7. Verfahren nach Anspruch 6,

- wobei das Uncertainty Sampling durch Wählen von Kandidatenzellen (CC) implementiert wird, die angesichts des aktuellen Trainingszustands des Tabellencodierers (TE) eine maximale Entropie aufweisen, und
- wobei die Strafe durch eine Strafgewichtung implementiert wird, die sich mit der Anzahl aus der gleichen Konfigurationstabelle (CT) gewählter Kandidatenzellen (CT) erhöht.

**8.** System zum automatischen Erkennen von Fehlern in Konfigurationstabellen für Industrieanlagen, das Folgendes umfasst:

- einen Tabellencodierer (TE), der zum Verarbeiten einer Konfigurationstabelle (CT) trainiert ist,

- wobei die Konfigurationstabelle (CT) eine Kopfzeile und Tabellenkörperzeilen enthält,
- wobei jede Tabellenkörperzeile Tabellenkörperzellen enthält und einer Einheit einer Industrieanlage entspricht,
- wobei jede Spalte der Tabelle (CT) einer Konfigurationseigenschaft der jeweiligen Einheiten entspricht,
- wobei die Kopfzeile Kopfzellen enthält, die die jeweiligen Eigenschaften nennen,
- wobei die Tabellenkörperzellen Token enthalten,
- wobei der Tabellencodierer (TE) mit einem Token-Klassifizierungsmodell implementiert ist, das ein tabellarisches Sprachmodell zum Erfassen latenter Repräsentationen der Token benutzt, und
- wobei das tabellarische Sprachmodell oben einen Token-Klassifizierungskopf aufweist,

und zum Schätzen eines Fehlerwahrscheinlichkeitswerts für jede Tabellenkörperzelle und/oder für jedes Token in dieser Tabellenkörperzelle, der eine geschätzte Wahrscheinlichkeit angibt, dass die Zelle und/oder das Token einen Fehler enthält, und
- einen Vergleicher, der zum Vergleichen (2) des Fehlerwahrscheinlichkeitswerts für jede Tabellenkörperzelle und/oder jedes Token in dieser Tabellenkörperzelle mit einem vorgegebenen Schwellenwert und zum Erkennen konfiguriert ist, dass die Tabellenkörperzelle fehlerhaft ist, wenn der Fehlerwahrscheinlichkeitswert über dem vorgegebenen Schwellenwert liegt.

**9.** Aktives Lernsystem (ALS), das Folgendes umfasst:

- eine Datenbank, in der ein Satz Konfigurationstabellen (CT) gespeichert ist,
- einen Tabellenkalkulationsvorprozessor, der zum Extrahieren tokenisierter Tabellenzellen (TTC) aus jeder Konfigurationstabelle (CT) konfiguriert ist,
- das System nach Anspruch 8, wobei der Tabellencodierer (TE) zum Verarbeiten der tokenisierten Tabellenzellen (TTC) und Schätzen eines Fehlerwahrscheinlichkeitswerts für jede tokenisierte Tabellenzelle (TTC) konfiguriert ist,
- eine Abfragestrategie-Komponente für das aktive Lernen (ALQS), die zum Wählen von Kandidatenzellen (CC) aus dem Satz Konfigurationstabellen (CT) mit einer gemischten Strategie konfiguriert ist, die ein Uncertainty Sampling mit einer Strafe für das Auswählen mehrerer Kandidatenzellen (CC) aus der gleichen Konfigurationstabelle (CT) kombiniert,
- eine Benutzerschnittstelle, die für Folgendes konfiguriert ist:

- Ausgeben der Kandidatenzellen (CC) und
- Empfangen von gelabelten Zellen (LC), wobei die gelabelten Zellen (LC) die Kandidatenzellen (CC) sowie Label enthalten, die angeben, ob die Kandidatenzellen (CC) fehlerhaft sind, und

- eine Trainingskomponente (TC), die zum Durchführen von Gradientenaktualisierungen (GU) an dem Tabellencodierer (TE) unter Verwendung der gelabelten Zellen (LC) konfiguriert ist.

**10.** Computerprogrammprodukt, das Anweisungen umfasst, die, wenn das Programm von einem Computer ausgeführt wird, diesen dazu veranlassen, ein Verfahren nach einem der Verfahrensansprüche durchzuführen.

**11.** Bereitstellvorrichtung für das Computerprogrammprodukt nach dem vorhergehenden Anspruch, wobei das Computerprogrammprodukt auf der Bereitstellvorrichtung gespeichert ist und/oder von dieser bereitgestellt wird.

**Revendications**

**1.** Procédé mis en œuvre par ordinateur pour la détection automatique d'erreurs dans des tableaux de configuration d'installation industrielle, dans lequel les opérations suivantes sont réalisées par des composants, et dans lequel les composants sont des composants logiciels exécutés par un ou plusieurs processeurs et/ou des composants matériels :

- l'estimation (1), par un codeur de tableau (TE) entraîné traitant un tableau de configuration (CT),

    - dans lequel le tableau de configuration (CT) contient une ligne d'en-tête et des lignes de corps,
    - dans lequel chaque ligne de corps contient des cellules de corps et correspond à une entité d'une installation industrielle,
    - dans lequel chaque colonne du tableau (CT) correspond à une propriété de configuration des entités respectives,
    - dans lequel la ligne d'en-tête contient des cellules d'en-tête nommant les propriétés respectives,
    - dans lequel les cellules de corps contiennent des jetons,
    - dans lequel le codeur de tableau (TE) est mis en œuvre avec un modèle de classification de jetons qui utilise un modèle de langage tabulaire pour obtenir des représentations latentes des jetons, et
    - dans lequel le modèle de langage tabulaire possède une tête de classification de jetons sur le haut,

pour chaque cellule de corps et/ou pour chaque jeton dans cette cellule de corps, d'une valeur de probabilité d'erreur, qui donne une probabilité estimée que la cellule et/ou le jeton contienne une erreur, et
- la comparaison (2) de la valeur de probabilité d'erreur pour chaque cellule de corps et/ou pour chaque jeton dans cette cellule de corps avec un seuil donné, et si la valeur de probabilité d'erreur est au-dessus du seuil donné, la détection que la cellule de corps est erronée.

2. Procédé selon la revendication 1, avec les opérations supplémentaires de

    - la sortie, par une interface utilisateur, de la cellule de corps erronée, et
    - la réception, par l'interface utilisateur, d'une valeur corrigée pour la cellule de corps erronée.

3. Procédé selon la revendication 1, avec les opérations supplémentaires de

    - la génération de différentes versions du tableau de configuration (CT), en particulier par le remplissage, dans chaque version, de la cellule erronée avec une valeur provenant d'une autre cellule dans la même colonne du tableau de configuration (CT),
    - l'estimation, par le codeur de tableau (TE) entraîné, pour chaque version, d'une valeur de probabilité d'erreur pour la cellule remplie, et
    - le choix de la version ayant la valeur de probabilité d'erreur la plus basse.

4. Procédé selon la revendication 1, avec les opérations supplémentaires de

    - la réception, par une interface utilisateur, d'au moins une entrée pour une nouvelle ligne du tableau de configuration (CT),
    - la génération de différentes versions du tableau de configuration (CT) par le remplissage d'une cellule vide dans la nouvelle ligne avec différentes valeurs, en particulier avec des valeurs aléatoires ou avec des valeurs provenant d'autres cellules dans la colonne respective du tableau de configuration (CT),
    - l'estimation, par le codeur de tableau (TE) entraîné, pour chaque version, d'une valeur de probabilité d'erreur pour la cellule remplie, et
    - le choix de la version ayant la valeur de probabilité d'erreur la plus basse.

5. Procédé selon l'une quelconque des revendications précédentes,

    - dans lequel le modèle de langage tabulaire est mis en œuvre avec une architecture TaBert ou TURL.

6. Procédé selon l'une quelconque des revendications précédentes, dans lequel le codeur de tableau (TE) est initialement entraîné avec les opérations de

    - la fourniture, par une base de données, d'un ensemble de tableaux de configuration (CT),
    - l'extraction, par un préprocesseur de feuille de calcul, de cellules de tableau converties en jetons (TTC) à partir de chaque tableau de configuration (CT), et

- la réalisation, de manière itérative, des opérations suivantes :

- le traitement, par le codeur de tableau (TE), des cellules de tableau converties en jetons (TTC) et l'estimation, pour chaque cellule de tableau convertie en jetons (TTC), d'une valeur de probabilité d'erreur,
- la sélection, par une stratégie d'interrogation d'apprentissage actif (ALQS), de cellules candidates (CC) à partir de l'ensemble de tableaux de configuration (CT) avec une stratégie mixte combinant un échantillonnage d'incertitude avec une pénalité pour le prélèvement de multiples cellules candidates (CC) à partir du même tableau de configuration (CT),
- la sortie, par une interface utilisateur, des cellules candidates (CC),
- la réception, par l'interface utilisateur, de cellules étiquetées (LC), dans lequel les cellules étiquetées (LC) contiennent les cellules candidates (CC) ainsi que des étiquettes indiquant si les cellules candidates (CC) sont erronées, et
- la réalisation, par un composant d'entraînement (TC), de mises à jour par gradient (GU) sur le codeur de tableau (TE), à l'aide des cellules étiquetées (LC).

**7.** Procédé selon la revendication 6,

- dans lequel l'échantillonnage d'incertitude est mis en œuvre par la sélection de cellules candidates (CC) qui possèdent une entropie maximale étant donné l'état d'entraînement actuel du codeur de tableau (TE), et
- dans lequel la pénalité est mise en œuvre par une pondération de pénalité qui augmente avec le nombre de cellules candidates (CT) qui sont sélectionnées à partir du même tableau de configuration (CT).

**8.** Système pour la détection automatique d'erreurs dans des tableaux de configuration d'installation industrielle, comprenant :

- un codeur de tableau (TE), entraîné pour traiter un tableau de configuration (CT),

- dans lequel le tableau de configuration (CT) contient une ligne d'en-tête et des lignes de corps,
- dans lequel chaque ligne de corps contient des cellules de corps et correspond à une entité d'une installation industrielle,
- dans lequel chaque colonne du tableau (CT) correspond à une propriété de configuration des entités respectives,
- dans lequel la ligne d'en-tête contient des cellules d'en-tête nommant les propriétés respectives,
- dans lequel les cellules de corps contiennent des jetons,
- dans lequel le codeur de tableau (TE) est mis en œuvre avec un modèle de classification de jetons qui utilise un modèle de langage tabulaire pour obtenir des représentations latentes des jetons, et
- dans lequel le modèle de langage tabulaire possède une tête de classification de jetons sur le haut,

et pour estimer, pour chaque cellule de corps et/ou pour chaque jeton dans cette cellule de corps, une valeur de probabilité d'erreur, qui donne une probabilité estimée que la cellule et/ou le jeton contienne une erreur, et
- un comparateur, configuré pour comparer (2) la valeur de probabilité d'erreur pour chaque cellule de corps et/ou pour chaque jeton dans cette cellule de corps avec un seuil donné, et si la valeur de probabilité d'erreur est au-dessus du seuil donné, détecter que la cellule de corps est erronée.

**9.** Système d'apprentissage actif (ALS), comprenant

- une base de données, stockant un ensemble de tableaux de configuration (CT),
- un préprocesseur de feuille de calcul, configuré pour extraire des cellules de tableau converties en jetons (TTC) à partir de chaque tableau de configuration (CT),
- le système selon la revendication 8, dans lequel le codeur de tableau (TE) est configuré pour traiter les cellules de tableau converties en jetons (TTC) et estimer, pour chaque cellule de tableau convertie en jetons (TTC), une valeur de probabilité d'erreur,
- un composant de stratégie d'interrogation d'apprentissage actif (ALQS), configuré pour sélectionner des cellules candidates (CC) à partir de l'ensemble de tableaux de configuration (CT) avec une stratégie mixte combinant un échantillonnage d'incertitude avec une pénalité pour le prélèvement de multiples cellules candidates (CC) à partir du même tableau de configuration (CT),
- une interface utilisateur, configurée pour

- délivrer en sortie les cellules candidates (CC), et
- recevoir des cellules étiquetées (LC), dans lequel les cellules étiquetées (LC) contiennent les cellules candidates (CC) ainsi que des étiquettes indiquant si les cellules candidates (CC) sont erronées, et

- un composant d'entraînement (TC), configuré pour réaliser des mises à jour par gradient (GU) sur le codeur de tableau (TE), à l'aide des cellules étiquetées (LC).

10. Produit de programme informatique comprenant des instructions qui, lorsque le programme est exécuté par un ordinateur, amènent l'ordinateur à mettre en œuvre un procédé selon l'une des revendications de procédé.

11. Dispositif de fourniture pour le produit de programme informatique selon la revendication précédente, dans lequel le dispositif de fourniture stocke et/ou fournit le produit de programme informatique.

EP 4 425 282 B1

# FIG 1

# FIG 2

# FIG 3

CT

| No. | Eq.name | Process Step | min/max nominal pressure | Temperature (Celsius) |
|---|---|---|---|---|
| P-47-01 | Area 47 - Cent. pump | Refinement | 20/30 bar | 20 |
| T-41-02/A, T-41-02/B | Wtr Tank (qty: 2) | Fermenting | Inner: 10/20 Outer: 5/10 | 50, 60 |
| P-46-01 | Area 46 - Pump | Waste removal | 200 /30 bar | 16 |

R

C

EP 4 425 282 B1

FIG 4

FIG 5

EP 4 425 282 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2022230476 A1

**Non-patent literature cited in the description**

- TabReformer: Unsupervised Representation Learning for Erroneous Data Detection. **NASHAAT MONA NASHAATA@UALBERTA CA et al.** ACM/IMS TRANSACTIONS ON DATA SCIENCE. ACMPUB27, 17 May 2021, vol. 2, 1-29

- **YIN P.** ; **NEUBIG G.** ; **YIH W.** ; **RIEDEL S.** TABERT: Pretraining for Joint Understanding of Textual and Tabular Data. *ACL*, 2020
- **DENG et al.** TURL: table understanding through representation learning. *VLDB*, 2020